# EUROPEAN PATENT SPECIFICATION

(11) **EP 1 550 544 B1**
(45) Date of publication and mention of the grant of the patent: **18.06.2008**
(21) Application number: 04028907.6
(22) Date of filing: 07.12.2004
(51) Int. Cl.: B29C 47/68, B01D 33/048

(54) **Device for continuous filtering of molten plastic**
Vorrichtung zum kontinuierlichen Filtern eines geschmolzenen Kunststoffes
Dispositif de filtrage continu d'une matière thermoplastique fondue

(30) Priority: 29.12.2003 IT PD20030310
(43) Date of publication of application: 06.07.2005
(73) Proprietor: F.I.M.I.C. s.n.c., 35010 Carmignano di Brenta PD (IT)
(72) Inventor: Canaia, Antonio, 35010 Carmignano di Brenta PD (IT)

(56) References cited:
- US-A- 3 596 442
- US-A- 3 645 399
- US-A- 4 080 297
- US-A- 5 320 753
- PATENT ABSTRACTS OF JAPAN vol. 010, no. 385 (M-548), 24 December 1986 (1986-12-24) -& JP 61 175016 A (TOMY KIKAI KOGYO KK), 6 August 1986 (1986-08-06)

## Description

Various types of devices of varying efficiency exist on the market for cleaning contaminated molten plastic by means of filtering. For example, devices are known in which the contaminated molten plastic is pushed against a mesh-like perforated sheet metal disc resting against a perforated disc (with holes proportional to the thickness) of suitable thickness which withstands the thrust exerted against the mesh-like metal sheet. When the mesh disc is clogged in this system, it is either replaced or cleaned by scraper blades activated for the purpose. In the case of replacement of the mesh disc, the cleaning process must be interrupted and the clogged mesh disc must be thrown away. In the case of disc cleaning by means of scraper blades, the production process continues but with simultaneous partial loss of plastic material or the process has to be slowed down with loss of plastic material. In the latter case the metal mesh disc has to be periodically replaced, even if appropriately treated with surface hardening.

Another known device US 5320753 A is produced with a fine wire mesh strip coming from a coil. The device consists of a chamber divided by a section of the above mesh with rectilinear arrangement resting against a perforated plate to withstand the thrust of the contaminated molten plastic material to be filtered under pressure. The section of mesh strip positioned for filtering is blocked at the ends and retained by clamps. The contaminated molten plastic is introduced into the space in front of the mesh under pressure, as previously, is pushed through the mesh and arrives clean in the space on the opposite side of the plate subject to the pressure exerted by the mesh.

This device also has several drawbacks. When the section of mesh is clogged, the pressure exerted against it by the molten plastic which is not able to pass through is excessive and the process has to be stopped. The pressure is eliminated and the plastic is accumulated in an auxiliary cylinder. The tapered mesh locking clamps are opened by means of hydraulic control and the mesh strip slides in front of the perforated plate (which withstands the pressure of the mesh during operation) so that the section of clogged mesh comes out and winds around a reel and a new clean section is inserted coming from the supply coil branch. Once the section of clean mesh has been repositioned, locking is performed by means of the tapered clamps positioned at the end and the material previously accumulated in the auxiliary cylinder is reintroduced into circulation. Once the space in which the pressure has to be re-set has been sealed, the production cycle is resumed and further material to be filtered arrives. This method is very time-consuming and furthermore does not generate a constant flow of the passage of the plastic material to the next work phase, where the cooled material is reduced to forms that can be easily bagged for transport (generally in the form of granules). The solutions to the above mentioned problems are provided by devices according to claims 1 and 2. The device implemented according to the invention consists of a chamber housing a hollow cylinder with perforated surface with a fine wire mesh strip wrapped around it. The molten plastic enters the space in the chamber not occupied by the hollow cylinder and under pressure crosses the mesh (which retains the impurities) and the perforated surface of the cylinder, finishing in the cavity of the above cylinder which communicates with the outlet. The section of mesh wrapped around the cylinder is part of a moving strip fed by an external coil which is clean when it enters the device on one side and after wrapping around the perforated hollow cylinder comes out clogged, as it is no longer efficient, on the opposite side of the device. The entire procedure, once working up to speed (after assembly of the wire mesh strip coil, unwinding and insertion of the free end of the mesh between the drive rollers, positioning of the mesh on the outer surface of the perforated hollow cylinder, and connection of the outgoing end of the mesh to rewind it on a reel) is performed automatically without constant operator intervention. When, after cleaning of the contaminated plastic, the portion of mesh strip on the perforated hollow cylinder is clogged by the foreign material retained and consequently the pressure encountered by the extruder device that conveys the plastic increases, the wire mesh strip drive rollers are automatically rotated and the wire mesh begins to gradually move forward to expel the section of clogged mesh and introduce a corresponding section of new wire mesh strip. The perforated hollow cylinder, which is fitted in a floating manner inside the chamber of the device, is rotated by the forward movement of the mesh. It should be noted that the perforated hollow cylinder, at the head ends, provides the "seal" by moving adhering to the bottom walls of the cover and main block of the device in which it is contained without forcing. While the space of the chamber of the device not occupied by the perforated hollow cylinder communicates with the inlet of the contaminated molten plastic, the cavity of the perforated cylinder in which the clean molten plastic arrives communicates with the outlet, via which the clean material proceeds to the subsequent work phases without interruption. The pairs of drive rollers (which are automatically driven according to a specific program) positioned on the mesh inlet side draw new mesh from the external coil, while the pairs of rollers (which are also automatically driven according to a specific program) positioned on the outlet side of the mesh draw the mesh which is resting on the perforated hollow cylinder, conveying it to the outside to a winding reel. The two pairs of rollers generally rotate at the same speed, but if rotation of the outlet rollers is increased with respect to that of the inlet rollers, the section of mesh resting on the perforated hollow cylinder is tensioned, increasing adhesion on the surface of the perforated perforated hollow cylinder. If the upper rollers with the interposed wire mesh strip sustain the perforated hollow cylinder pressed against them by the molten plastic under pressure which surrounds it, the lower rollers cooperate with the upper ones to move the mesh. In conjunction with a floating roller positioned in the space between their surfaces the seal for any molten material which, passing from the inside to the outside of the perforated hollow cylinder, flows out into the lower space not enveloped by the mesh, filling it and remaining there.

A variation of the device as previously described consists in driving the perforated drum by means of a rotating apparatus via which it remains floating and rotates independently, but synchronised with the feed of the mesh that envelops it. A further variation in concomitance or otherwise with the variation that moves the perforated drum as described above consists in a different manner of sustaining the perforated roller. Without prejudice to the function of the rotating rollers for feeding the mesh positioned between them and the outer surface of the perforated drum and enveloping said drum, a further two motorised rollers which are not involved with the branch of incoming clean mesh strip and the branch of outgoing clogged mesh act as a support, resting directly on the lower section of the periphery of the drum.

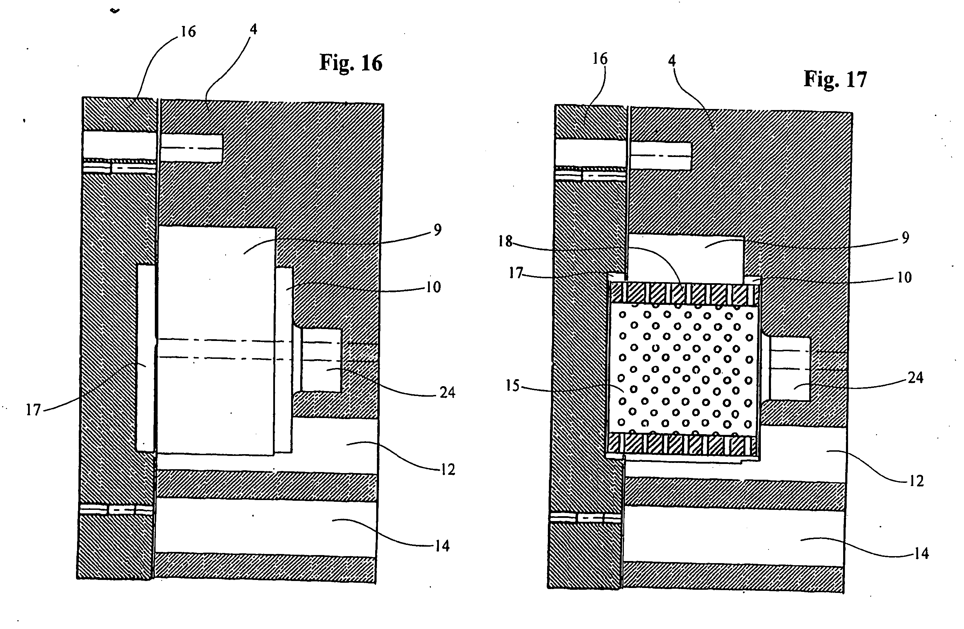

The above description is clearly illustrated in the attached drawings.

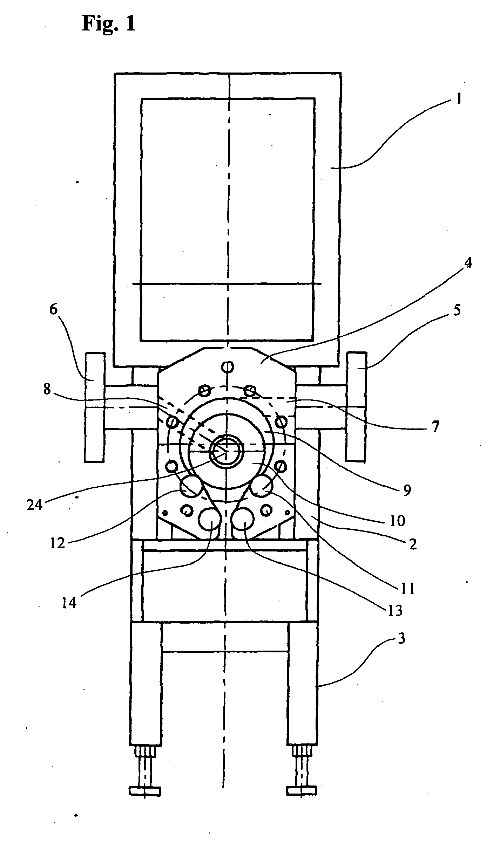

Fig. 1 shows the device of the patent seen frontally fitted on the supporting structure without any connection to the apparatus for feeding of the contaminated molten plastic, without front closing cover, without the perforated hollow cylinder and without the fine wire mesh strip.

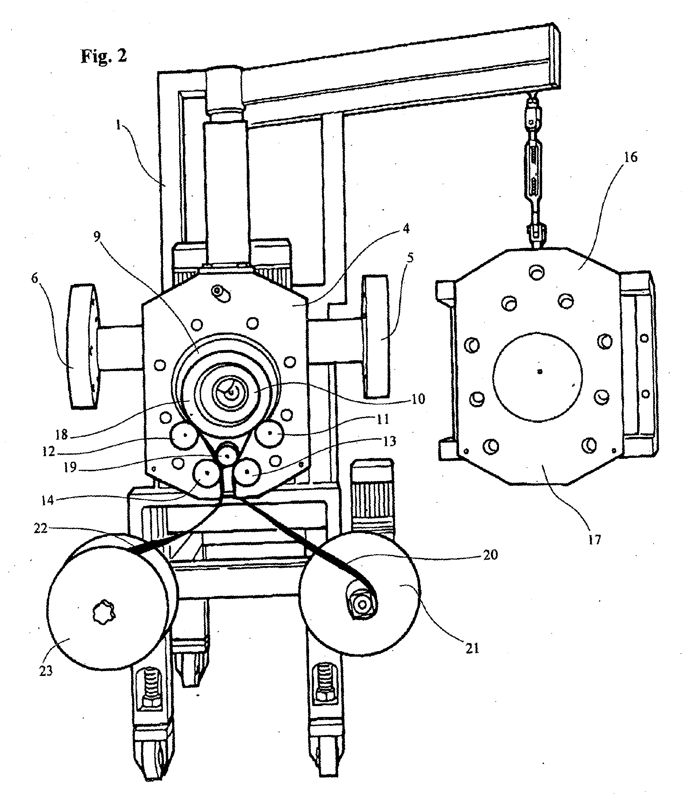

Fig. 2 shows the device of the patent seen axonometrically from the front, fitted on the supporting structure, with the cover separate and hanging at the side. Note in the cavity of the main block of the device the perforated hollow cylinder and the fine wire mesh strip which, starting from a feed reel, enters the device resting on a first pair of rollers (inlet) and, after running around the cylinder, proceeds, resting on a second pair of rollers (outlet) after which it leaves the device and is wound on a collecting reel. Note the presence of a fifth roller, fitted in a floating manner, resting (with the two branches of the incoming and outgoing wire mesh interposed) on the two lower rollers previously considered motorisable for feeding the narrow wire mesh strip; said fifth roller seals the space below the perforated hollow cylinder, the surface section of which in front of said space is not enveloped by the fine wire mesh strip.

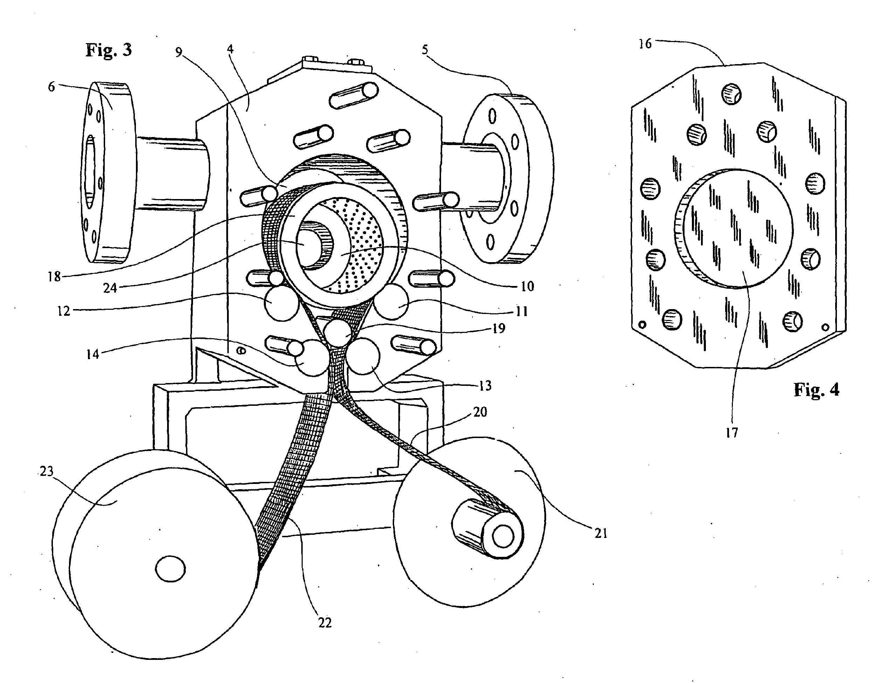

Fig. 3 corresponds to Fig. 2 with frontal-lateral axonometric view, showing the parts described in the preceding figure more clearly.
Fig. 4 shows the cover that closes the device of Fig. 3 at the front.

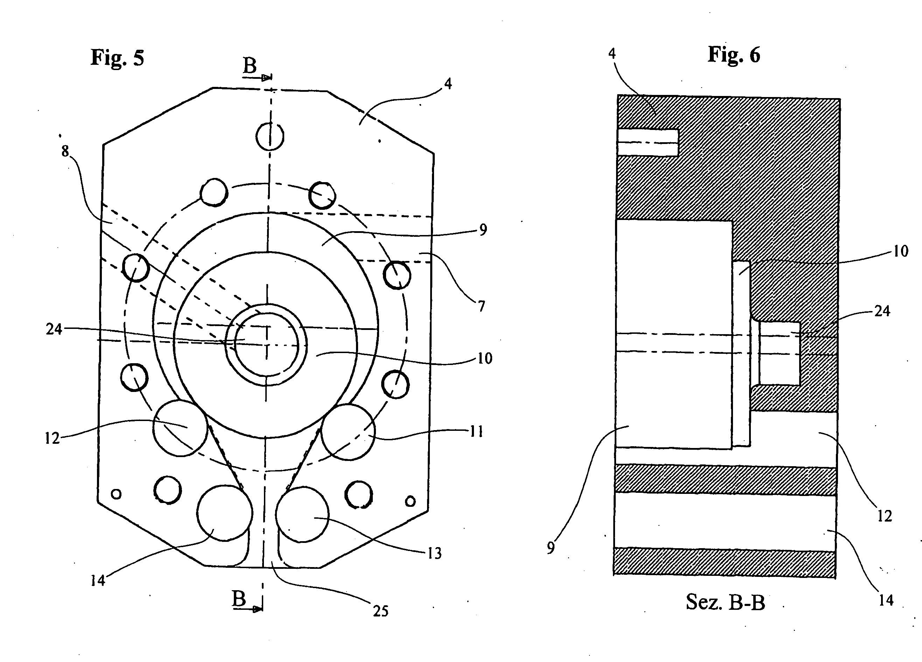

Fig. 5 shows a front view of the main block of the device on its own, disassembled.
Fig. 6 shows the section of the main block represented in Fig. 5 in an informal manner, with the drive shaft housings.

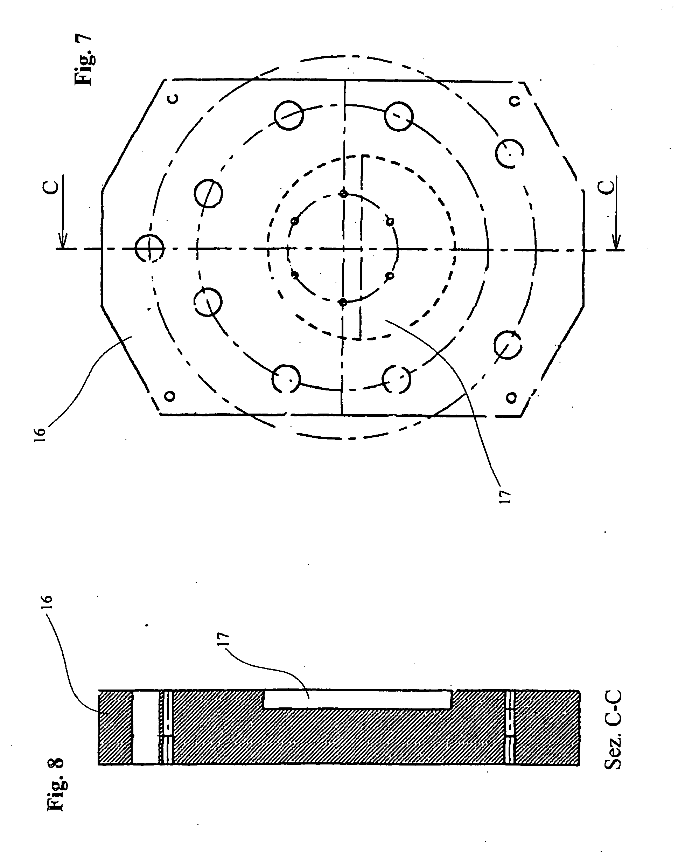

Fig. 7 shows a front view of the cover on its own, disassembled, for application to the main block of the device.
Fig. 8 shows the section of the cover represented in Fig. 7.

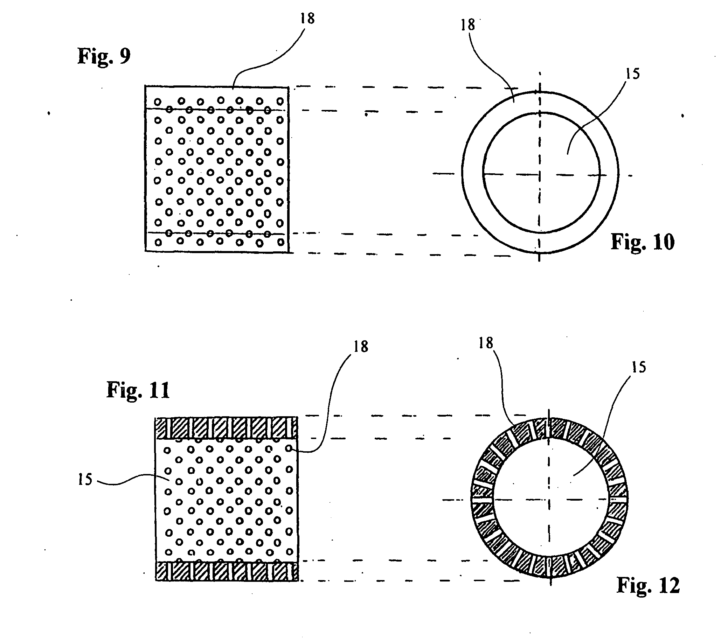

Fig. 9 shows disassembled externally the perforated hollow cylinder which must be fitted in the cavity defined by the central block of the device and the related closing cover.
Fig. 10 is a front view of the cylinder shown in Fig. 9.
Fig. 11 shows the longitudinal section of the cylinder represented in Fig. 10 and Fig. 12 is a transverse representation of the cylinder shown in Fig. 10.

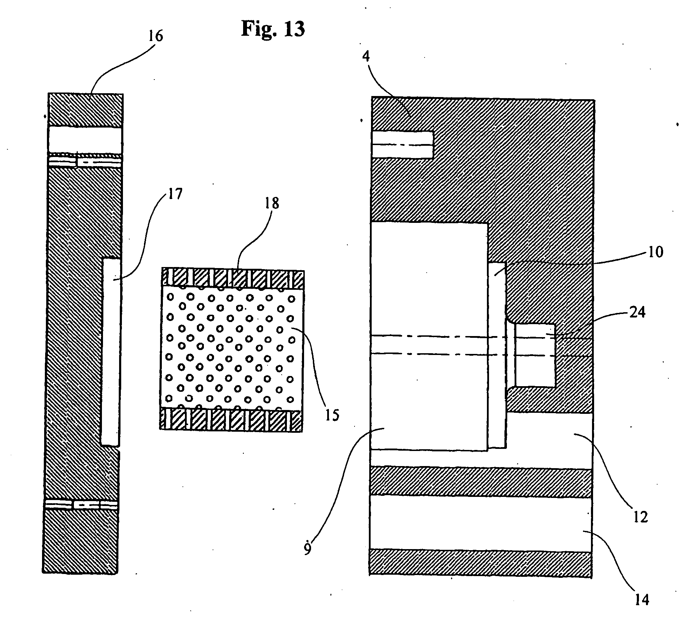

Fig. 13 is an exploded view of the main block of the device, of the perforated hollow cylinder and the closing cover that must be applied to the main block.
(The description and the drawings do not contain any figures 14, 15. Figure 16 comes directly after figure 13.)
Fig. 16 shows in section the main block of the device represented in Fig. 6 with application of the cover shown in Fig. 8 without anything inside.
Fig. 17 corresponds to Fig. 16 with the perforated hollow cylinder shown in Fig. 11 housed inside.

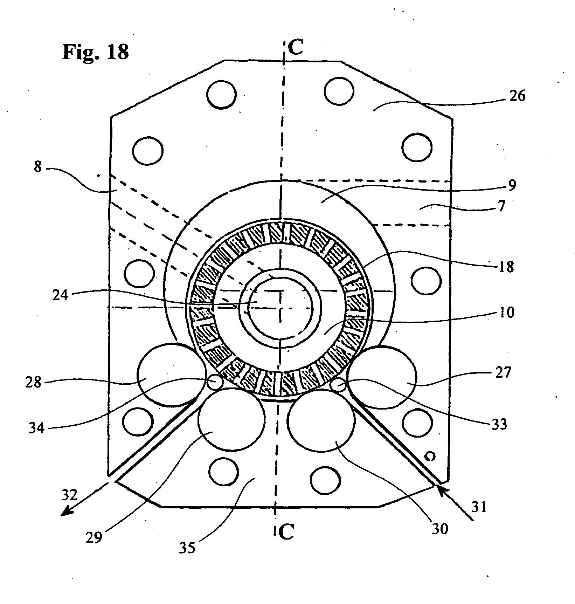

Fig. 18 shows a front view of the main block of the device produced according to the variation in which in addition to the rollers that support the cylinder against the interposed mesh, a further two rollers positioned resting directly below withstand the thrust of the pressurised resin on the perforated hollow cylinder via the mesh resting on its outer surface. The clean molten resin which from the inside of the perforated roller passes into the space below between the incoming wire mesh branch and the outgoing wire mesh branch in practice cannot leak out through the gap of each of the two pairs of adjacent rollers considered above due to the presence of two small floating rollers which, not interfering with the movement of the two branches of the mesh, close said gap.

As can be seen from the figures, to set up the device, once the cover 16 has been removed from the main block 4, the perforated hollow cylinder 18 is introduced into the cavity 9 and a coil (not visible in the figure) of fine wire mesh strip is fitted on the reel 21. One end of the strip 20 is inserted into the aperture 25 of the block 4, it is fed to the drive roller 13 and inserted between the supporting drive roller 11 of the cylinder 18. Having covered the outer surface of the roller 18 with the strip 20, the end of the strip is fed forward, inserting it between the supporting drive roller 12 and the roller 18, passes over the drive roller 14 and comes out of the aperture 25. The branch of outgoing wire mesh strip is hooked to the reel 23 ready for winding. Having completed assembly of the wire mesh strip 20, 22 which enters and leaves via the aperture 25, after covering the hollow cylinder 18 the cover 16 is applied to the main block 4, locking it with the bolts provided. The cylinder 18 housed in a floating manner inside the space 19 and supported with the interposed wire mesh strip by the drive rollers 11, 12 provides a seal against the surface of the cavity 10 of the main block 4 of the device and against the surface 17 of the cavity of the cover 16, being able to slide in a close fit against said surfaces without forcing. The main block 4 of the device is connected to the extruder equipment provided with screw (not shown in the drawing) corresponding to the flange 5 via which the contaminated molten plastic is conveyed under pressure via the duct 7, filling the space 9 above the fine wire mesh resting on the hollow cylinder 18. Once the molten plastic, which has been cleaned by filtering through the wire mesh 20, 22, has reached the inside of the hollow cylinder 18 through the aperture 24, it is conveyed into the duct 8 and to the equipment connected to the flange 6 for further processing. When the portion of wire mesh resting on the perforated cylinder 18 is clogged and the pressure of the contaminated molten plastic in the space above 9 increases, the rollers 13, 11, 12, 14 are automatically rotated, feeding forward the clean portion of wire mesh strip 20, 22 until the programmed pressure value is restored. During feeding of the mesh 20, 22, the cylinder 18 sustained in a floating manner by the rollers 11, 12 also rotates due to adhesion with the fine wire mesh. The clean molten plastic inside the hollow cylinder 18, which comes out of the holes of the cylinder 18 in the section not enveloped by the mesh 20, 22 between the rollers 11, 12 fills the space below, the seal of which is guaranteed by the floating roller 19, which prevents communication with the aperture 25 below of the main block 4 of the device.

According to the variation of Fig. 18, set-up of the device is as already described, the only difference being that the main block 26 differs from the main block 4 due to the entry method of branch 20 and the exit method of branch 22 of the wire mesh strip which, instead of passing through the aperture 25 of the block 4, said branches 20 and 22 being moved by the two auxiliary rollers 13 and 14, branch 20 enters through the slot 31 and branch 22 leaves through the slot 32 present in the lower part 35 of the block 26, the mesh strip being moved by the rollers 27 and 28 in conjunction with the perforated drum if provided with rotation drive.

The seal to prevent leaking of the molten resin via the gap between the rollers 27 and 30 and the gap between the rollers 28 and 29 is provided by the presence, corresponding to said gaps respectively, of the floating roller 33 and the floating roller 34. The difference in the construction arrangement of the main block 26, provided with the rollers 29 and 30 (which can be motorised) that provide support at the bottom in direct contact with the periphery 18 of the perforated drum 18 reducing the compression of the wire mesh due to the load on the perforated drum 18 at the level of the rollers 27 and 28, does not modify the set-up procedure. From the above description it is evident that the device of the patent permits automatic processing without interruptions, 24 hours out of 24. When the supply of fine wire mesh strip 20, 22 is about to run out, without interrupting work the free end of the finished coil is welded to the beginning of a new coil. The device of the patent, new in conception, is a decisive factor in economy of production which is performed without interruption, automatically and without the intervention of personnel.

## Claims

1. Device for continuous filtering of molten plastic materials consisting of a body (4) fitted with an opening (5) where the plastic material to be filtered comes in from and an opening (6) where the filtered material gets out from, one opening (25) where a continuous strip of wire mesh, of suitable mesh size, enters and exits from (20, 22) that, crossed by said plastic materials, filters them from contaminants, said wire mesh strip inside said body (4) is pushed against the outer surface of a perforated hollow cylinder (18) that rotates on its main axis, a pair of holding rollers (11, 12) parallel to the perforated hollow cylinder (18) bound the section of wire mesh pushed against said perforated hollow cylinder (18) whose pair of holding rollers (11, 12) with wire mesh interposed between them and the perforated hollow cylinder (18) create the 'sealing' of the molten plastic material coming in from the inlet opening (5) **characterised by** the fact that the seal against the exit through the opening (25) of the filtered plastic material that passes from the inside to the outside of the perforated hollow cylinder (18) in correspondence with the section that is not enveloped by the mesh that goes from the support of the rollers (11, 12) to the perforated hollow cylinder (18) with wire mesh in between (20, 22) is achieved by a pair of rollers (13, 14) accompanying the wire mesh entering (20) and exiting (22), parallel with each other and separated by a third floating roller (19) with interposed the branches of wire mesh entering (20) and exiting (22) supporting over the above-mentioned accompanying rollers (13, 14) centred in the gap between them.

2. Device for continuous filtering of molten plastic materials consisting of a body fitted with an opening where the plastic material to be filtered comes in from and an opening where the filtered material gets out from, one opening where a continuous strip of wire mesh, of suitable mesh size, enters and exits from that, crossed by said plastic materials, filters them from contaminants, said wire mesh strip inside said body is pushed against the outer surface of a perforated hollow cylinder that rotates on its main axis, a pair of rollers (27, 28) parallel to the perforated hollow cylinder bound the section of wire mesh pushed against said perforated hollow cylinder (18) whose pair of rollers with wire mesh interposed between them and the perforated hollow cylinder (18) create the 'sealing' of the molten plastic material coming in from the inlet opening **characterised by** the fact that the body (26) includes two passageways for the wire mesh strip, one entering (31) the body (26) and one exiting (32) the body (26) and due to the fact that the 'sealing' that prevents the filtered plastic material that passes from the inside (15) to the outside of the perforated hollow cylinder (18) from exiting from said two passageways (31, 32), is achieved
a.in correspondence with the entering passageway (31) by two parallel rollers (27, 30) supporting the perforated hollow cylinder (18) one of which (30) directly supporting and the other one (27) supporting with the entering wire mesh branch (20) interposed, and a third floating roller (33) located in the centre of the gap between the above-mentioned parallel rollers (27, 30), and this floating roller (33) is directly supporting one (30) of the two and supporting the second one (27) with the entering wire mesh branch (20) interposed;
b. and in correspondence with the exiting passageway (32) by two parallel rollers (28, 29) supporting the perforated hollow cylinder (18) one of which (29) directly supporting and the other one (28) supporting with the exiting wire mesh branch (22) interposed, and a third floating roller (34) located in the centre of the gap between the above-mentioned parallel rollers (28, 29) and this floating roller (34) is directly supporting one (29) of the two and supporting the second one (28) with the exiting wire mesh branch (22) interposed.

3. Filtering device as per claim 1 or 2 **characterised in that** the perforated hollow cylinder (18) is floating and allows the wire mesh strip pushed against the perforated hollow cylinder (18) to keep it under pressure (with the wire mesh strip interposed) against the holding rollers (11, 12) in order to ensure that the plastic material to be filtered present in the cavity (9) within the body is held there.

4. Filtering device as per claim 1 or 3 **characterised in that** the weight of the perforated cylinder (18) is supported by the driving rollers (11, 12).

5. Filtering device as per claim 2 or 3 **characterised in that** the weight of the perforated hollow cylinder (18) is supported by the lower holding rollers (29, 30) allowing the pressure on the wire mesh strip to be divided between the perforated hollow cylinder (18) and the driving rollers (27, 28).

6. Filtering device as per claim 1 **characterised in that** the body (4) consists of only one passageway (25) for both the entry of the clean strip (20) and the exit of the clogged strip (22).

7. Filtering device as per one or more of the above claims **characterised in that** the exit of the filtered plastic material takes place through an opening (24) in the body (4, 26) in communication with the cavity (15) in the perforated hollow cylinder (18).

## Patentansprüche

1. Filtervorrichtung zur durchgehenden Filterung von geschmolzenem Kunststoffmaterial, bestehend aus einem Körper (4), der eine Öffnung (5) für die Zufuhr von dem zu filternden Kunststoffmaterial und eine Öffnung (6) für den Austritt des gefilterten Kunststoffmaterials hat und außerdem eine Öffnung (25) besitzt für den stetigen Ein- und Ausgang eines engmaschigen Metallnetzbands (20, 22), das von obengenannten Kunststoffmaterialen durchflossen wird und diese dabei von Unreinheiten befreit. Besagtes Metallnetzband in besagtem Körper (4) ist an die äußere Oberfläche eines durchlöcherten Hohlzylinders (18) gelegt, der sich um seine Hauptachse dreht. Ein Dichtungswalzenpaar (11, 12), das parallel zum durchlöcherten Hohlzylinder (18) liegt, grenzt das auf besagtem durchlöcherten Hohlzylinder (18) aufliegende Metallnetzbandstück ab. Dasselbe Dichtungswalzenpaar (11, 12) mit dem zwischen ihnen und dem durchlöcherten Hohlzylinder (18) liegenden Metallnetz, gewährleistet die Abdichtung gegen das geschmolzene Kunststoffmaterial, das durch die Öffnung (5) in die Vorrichtung gelangt. Die Abdichtung gegen das Austreten aus der Öffnung (25) des gefilterten Kunststoffmaterials - das vom Innenraum des durchlöcherten Hohlzylinders (18) am nicht vom Netz bedeckten Teil, der sich von der Auflage der Walzen (11, 12) bis zum gelöcherten Hohlzylinder (18) mit dem dazwischenliegenden Netz erstreckt, nach außen gelangt - wird von einem Walzenpaar (13, 14), welches die eintretenden (20) und austretenden (22) Netzenden begleitet und sie parallel und distanziert hält, und von einer dritten, schwimmenden, Walze (19) übernommen, die sich zur Unterstützung zentral im oberen Zwischenraum zwischen den obengenannten begleitenden Walzen (13, 14) mit den dazwischenliegenden eintretenden (20) und austretenden (22) Netzenden befindet.

2. Filtervorrichtung zur durchgehenden Filterung von geschmolzenem Kunststoffmaterial, bestehend aus einem Körper (4), der eine Öffnung (5) für die Zufuhr von dem zu filternden Kunststoffmaterial und eine Öffnung (6) für den Austritt des gefilterten Kunststoffmaterials hat und außerdem eine Öffnung (25) besitzt für den stetigen Ein- und Ausgang eines engmaschigen Metallnetzbands (20, 22), das von obengenannten Kunststoffmaterialen durchflossen wird und diese dabei von Unreinheiten befreit. Besagtes Metallnetzband in besagtem Körper (4) ist an die äußere Oberfläche eines durchlöcherten Hohlzylinders (18) gelegt, der sich um seine Hauptachse dreht. Ein Walzenpaar (27, 28), das parallel zum durchlöcherten Hohlzylinder (18) liegt, grenzt das auf besagtem durchlöcherten Hohlzylinder (18) aufliegende Metallnetzbandstück ab. Dasselbe Walzenpaar (27, 28) mit dem zwischen ihnen und dem gelöcherten Hohlzylinder (18) liegenden Metallnetz, gewährleistet die Abdichtung gegen das geschmolzene Kunststoffmaterial, das durch die Öffnung (5) in die Vorrichtung gelangt. Dieser Vorgang ist erstens **dadurch gekennzeichnet, dass** der Körper (26) zwei Durchgänge für das Metallnetzband hat, einen im Eintrittsbereich (31) des Körpers (26) und einen im Austrittsbereich (32) des Körpers, und zweitens dass die Abdichtung gegen das Austreten durch die obengenannten Durchgänge (31, 32) des gefilterten Kunststoffmaterials, das vom Innenraum (15) des durchlöcherten Hohlzylinders (18) nach außen gelangt, folgendermaßen erzielt wird:
a. Im Eintrittsbereich (31) wird die Abdichtung von zwei parallelen Walzen (27, 30), die den durchlöcherten Hohlzylinder (18) halten und von denen eine (30) in direktem Kontakt und die andere (27) in indirektem Kontakt (da das Eintrittsende des Netzes (20) dazwischenliegt) zum Zylinder steht, und von einer dritten kleinen schwimmenden Walze (33) übernommen, die sich zentral in der Öffnung zwischen den obengenannten parallelen Walzen (27, 30) befindet. Besagte schwimmende Walze (33) ist in direktem Kontakt mit einer (30) der beiden parallelen Walzen und in indirektem Kontakt mit der anderen (27), da dort das Eintrittsende des Metallnetzbandes (20) dazwischenliegt.
b. Im Austrittsbereich (32) wird die Abdichtung von zwei parallelen Walzen (28, 29), die den durchlöcherten Hohlzylinder (18) halten und von denen eine (29) in direktem Kontakt und die andere (28) in indirektem Kontakt (da das Austrittsende des Netzes (22) dazwischenliegt) zum Zylinder steht, und von einer dritten kleinen schwimmenden Walze (34) übernommen, die sich zentral in der Öffnung zwischen den obengenannten parallelen Walzen (28, 29) befindet. Besagte schwimmende Walze (34) ist in direktem Kontakt mit einer (29) der beiden parallelen Walzen und in indirektem Kontakt mit der anderen (28), da dort das Austrittsende des Metallnetzbandes (22) dazwischenliegt.

3. Filtervorrichtung gemäß Anspruch 1 oder 2, welche **dadurch gekennzeichnet ist, dass** der durchlöcherte Hohlzylinder (18) schwimmend gelagert ist. Dies ermöglicht dem an besagtem durchlöcherten Hohlzylinder (18) angelegten Metallnetzband, diesen gegen die Dichtungswalzen (11, 12) zu stemmen, wobei das Metallnetzband selbst dazwischenliegt. Auf diese Weise wird die Abdichtung des zu filternden Kunststoffmaterials, das sich im Innenraum (9) des Körpers befindet, erreicht.

4. Filtervorrichtung gemäß Anspruch 1 oder 3, welche **dadurch gekennzeichnet ist, dass** das Gewicht der gelöcherten Walze (18) von den Antriebswalzen (11, 12) gehalten wird.

5. Filtervorrichtung gemäß Anspruch 2 oder 3, welche **dadurch gekennzeichnet ist, dass** das Gewicht des durchlöcherten Hohlzylinders (18) von den unteren Dichtungswalzen (29, 30) gehalten wird. Dies ermöglicht eine Verteilung des auf das Metallband einwirkenden Drucks auf den durchlöcherten Hohlzylinder (18) und die Antriebswalzen (27, 28).

6. Filtervorrichtung gemäß Anspruch 1, welche **dadurch gekennzeichnet ist, dass** der Körper (4) einen einzigen Durchgang (25) besitzt, der sowohl dem Eintritt des sauberen Bands (20) als auch dem Austritt des verstopften Bands (22) dient.

7. Filtervorrichtung gemäß einem oder mehrerer der obigen Ansprüche, welche **dadurch gekennzeichnet ist, dass** das gefilterte Kunststoffmaterial durch eine Öffnung (24) des Körpers (4, 26) ausfließt, welche mit dem Hohlraum (15) des durchlöcherten Hohlzylinders (18) verbunden ist.

## Revendications

1. Dispositif pour le filtrage continu de matières plastiques fondues composé d'un corps (4) muni d'une ouverture (5) pour l'entrée de la matière plastique à être filtrée et une ouverture (6) pour la sortie de la matière plastique une fois filtrée, et une ouverture (25) pour l'entréesortie continue d'un ruban métallique (20, 22) à mailles opportunément fines qui une fois traversé par les susdites matières plastiques filtre les polluants, le susdit ruban métallique à mailles , à l'intérieur de susdit corps (4) est addossé à la surface extérieure d'un cylindre creux perforé (18) qui tourne sur son axe principal, une paire de rouleaux d'étanchéité (11, 12) parallèles au cylindre creux perforè (18) délimitent la section de ruban métallique addossé contre le susdit cylindre creux perforé (18) dont la paire de susdits rouleaux d'étanchéité (11, 12) avec le ruban métallique interposé entre eux et le cylindre creux perforé (18) produit l'étanchéité de la matière plastique en fusion provenant de l'ouverture d'entrée (5) **caractérisé par le fait que** l'étanchéité contre la sortie à travers l'ouverture (25) de la matière plastique filtrée qui passe de l'intérieur vers l'extérieur du cylindre creux perforé (18) dans sa correspondance avec la section qui n'est pas enveloppée par le ruban qui va du soutien des rouleaux (11, 12) au cylindre creux perforé (18) avec le ruban entre les deux (20, 22), est assurée par une paire de cylindres (13, 14) qui accompagne les branches de ruban entrant (20) et sortant (22), parallèles et écartés entre eux et l'autre et par un troisième rouleau (19) flottant placé avec les branches de ruban entrant (20) et sortant (22) s'appuyant sur les susdits rouleaux accompagnateurs (13, 14) au centre dans leur interespace.

2. Dispositif pour le filtrage continu de matières plastiques fondues composé d'un corps (4) muni d'une ouverture (5) pour l'entrée de la matière plastique à être filtrée et une ouverture (6) pour la sortie de la matière plastique une fois filtrée, et une ouverture (25) pour l'entréesortie continue d'un ruban métallique (20, 22) à mailles opportunément fines qui une fois traversé par les susdites matières plastiques filtre les polluants, le susdit ruban métallique à mailles , à l'intérieur de susdit corps (4) est addossé à la surface extérieure d'un cylindre creux perforé (18) qui tourne sur son axe principal, une paire de rouleaux (27, 28) parallèles au cylindre creux perforè (18) délimitent la section de ruban métallique addossé contre le susdit cylindre creux perforé (18) dont la paire de susdits rouleaux (27, 28) avec le ruban métallique interposé entre eux et le cylindre creux perforé (18) produit l'étanchéité de la matière plastique en fusion provenant de l'ouverture d'entrée (5) **caractérisé par le fait que** le corps (26) comprend deux passages pour le ruban métallique, un dans l'entrée (31) du corps (26) et un dans la sortie (32) du corps (26) et en raison du fait que l'étanchéité contre la sortie à travers les susdits deux passages (31, 32) de la matière plastique filtrée qui passe de l'intérieur (15) à l'extérieur du cylindre creux perforé (18) se réalise
a. en correspondance au passage en entrée (31) par deux rouleaux parallèles (27, 30) s'appuyants au cylindre creux perforé (18) dont l'un (30) s'appuie directement et l'autre (27) s'appuie au branche intercalé du ruban (20) en entrée, et un troisième petit rouleau (33) flottant situé au centre entre les susdits rouleaux parallèles (27, 30), et susdit petit rouleau (33) flottant s'appuie directement avec un (30) des deux et s'appuie au branche de ruban interposé en entrée (20) avec l'autre (20) des deux;
b. en correspondance au passage en sortie (32) par deux rouleaux parallèles (28, 29) que s'appuient au cylindre creux perforé (18) dont l'un (29) s'appuie directement et l'autre (28) as'appuie avec le branche de ruban interposé (22) en sortie, et un troisième petit rouleau (34) flottant situé au centre entre les susdits rouleaux parallèles (28, 29) et susdit petit rouleau (34) flottant s'appuie directement avec un (29) des deux et s'appuie au branche de ruban intercalé en sortie (22) avec l'autre(22) des deux.

3. Dispositif pour le filtrage selon la récl. 1 ou 2, **caractérisé** du fait que le cylindre creux perforé (18) est flottant et permet au ruban métallique à mailles addossé contre le susdit cylindre creux perforé (18) de tenir-le sous pression (avec le ruban métalliqur interposé) contre les rouleaux d'étanchéité (11, 12) afin d'assurer l'étanchéité de la matière plastique à être filtrée présents dans la cavité (9) à l'intérieur du corps.

4. Dispositif pour le filtrage selon la récl. 1 ou 2, **caractérisé** du fait que le poids du rouleaux perforé (18) est soutenu par les rouleaux (11, 12) mouvants.

5. Dispositif pour le filtrage selon la récl. 2 ou 3, **caractérisé** du fait que le poids du cylindre creux perforé (18) est soutenu par les rouleaux inférieurs d'étancheité (29, 30) qui permet à la pression sur le ruban métallique d'être répartie entre le cylindre creux perforé (18) et les rouleaux mouvants (27, 28).

6. Dispositif pour le filtrage selon la récl. 1, **caractérisé** du fait que le corps (4) se compose d'un seul passage (25) à la fois pour l'entrée du ruban (20) nettoyé et la sortie dy ruban (22) bouché.

7. Dispositif pour le filtrage selon une ou plusieurs de ces revendications **caractérisé par le fait que** la sortie de la matière plastique filtrée se produit par une ouverture (24) dans le corps (4, 26) en communication avec la cavité (15) du le cylindre creux perforé (18).
